(19) **Europäisches Patentamt**

**European Patent Office**

**Office européen des brevets**

(11) **EP 1 283 970 B1**

(12) **EUROPÄISCHE PATENTSCHRIFT**

(45) Veröffentlichungstag und Bekanntmachung des Hinweises auf die Patenterteilung:
**23.03.2005 Patentblatt 2005/12**

(51) Int Cl.[7]: **F16M 11/04**, F16M 11/14

(21) Anmeldenummer: **01927563.5**

(86) Internationale Anmeldenummer:
**PCT/CH2001/000304**

(22) Anmeldetag: **17.05.2001**

(87) Internationale Veröffentlichungsnummer:
**WO 2001/090630 (29.11.2001 Gazette 2001/48)**

(54) **APPARATE-HALTEVORRICHTUNG**

APPARATUS MOUNTING DEVICE

DISPOSITIF DE FIXATION D'APPAREIL

(84) Benannte Vertragsstaaten:
**AT CH DE FR IT LI NL**

(30) Priorität: **23.05.2000 EP 00810448**

(43) Veröffentlichungstag der Anmeldung:
**19.02.2003 Patentblatt 2003/08**

(73) Patentinhaber: **USM Holding AG**
**3073 Gümligen (CH)**

(72) Erfinder:
- **SCHAERER, Alexander**
  **CH-3073 Gümligen (CH)**
- **CASSANI, Antonio**
  **CH-3110 Münsingen (CH)**
- **STOECKLI, Kaspar**
  **CH-3629 Kiesen (CH)**
- **KUENZI, Stephan**
  **CH-3074 Muri b. Bern (CH)**

(74) Vertreter: **Roshardt, Werner Alfred, Dipl.-Phys.**
**Keller & Partner**
**Patentanwälte AG**
**Schmiedenplatz 5**
**Postfach**
**3000 Bern 7 (CH)**

(56) Entgegenhaltungen:
EP-A1- 0 508 178        EP-A2- 0 312 355
CH-A- 336 567           CH-A- 519 117
DE-A1- 3 642 945        DE-U1- 9 011 338
US-A- 3 951 557         US-A- 4 447 139
US-A- 4 523 732         US-A- 4 568 216
US-A- 4 765 580         US-A- 5 505 424
US-A- 5 743 503         US-A- 5 842 672

## Beschreibung

### Technisches Gebiet

Die Erfindung betrifft eine Haltevorrichtung für einen Apparat, insbesondere für einen Bildschirm, welche eine Tragkonstruktion mit einem innerhalb eines vorgegebenen Bereichs frei variierbaren Neigungswinkel umfasst. Weiter umfasst die Haltevorrichtung ein elastisches Element zum Stützen der Tragkonstruktion entsprechend dem variierbaren Neigungswinkel und eine Verstellvorrichtung, welche entlang einer Verstellachse eine Verstellung eines Abstützpunktes des elastischen Elements ermöglicht, wobei die Verstellachse in einem Verstellachsenwinkel starr geneigt angeordnet ist.

### Stand der Technik

Es sind verschiedenste Haltevorrichtungen für Bildschirme bekannt. Durch die zunehmende Verbreitung von Flachbildschirmen werden jedoch neue und andere Anforderungen an eine entsprechende Haltevorrichtung gestellt.

Aus der US 5,842,672 ist eine solche Haltevorrichtung dargestellt, welche mit einer mehrgelenkigen Tragvorrichtung eine Befestigung eines Flachbildschirms ermöglicht. Die Fixierung der verschiedenen Gelenke der Tragvorrichtung erfolgt über Friktionsscheiben. Für die Bewegungssteuerung wird eine Gasdruckfeder verwendet, wobei die Bewegungen auf die vertikale Richtung begrenzt sind. Durch den Konstruktionsaufbau ist bei wechselnder Belastung eine Ausbalancierung, beispielsweise durch den Wechsel des Bildschirms, insbesondere im oberen und unteren Bereich des Schwenkbereichs nicht mehr gewährleistet.

In der DE-OS 41 11 408 A1 wird ein Tragarm für Computergeräte offenbart, welcher aus einem Parallelogramm gebildet wird und eine Teleskopeinheit mit einer Gasfeder aufweist. Da das Kraftdreieck seine Grösse beibehält und der Druck der Gasfeder konstant bleibt, ist der Tragarm selbsthemmend. Durch die Art der Konstruktion ist der Schwenkbereich sehr begrenzt.

Eine weitere Haltevorrichtung mit Parallelogrammführung ist aus der US 5,743,503 bekannt. Gasdruckfedern sorgen dafür, dass der Schwenkarm in der gewünschten Höhe gehalten wird. Um die Vorrichtung auf verschiedene Gewichte abstimmen zu können, ist der untere bzw. innere Abstützpunkt der Gasdruckfedern mit einem Gewindebolzen auf einer zur Lotrechten geneigten Achse verstellbar. Das äussere bzw. obere Ende der Gasdruckfedern greift an einem Punkt der Parallelogrammführung an, der einen gewissen Abstand zum äusseren Ende des Parallelogramms hat.

Eine ähnliche Konstruktion ist auch aus der US 4,523,732 ersichtlich. Für den Verstellachsenwinkel $\gamma$ wird dort ein Bereich von 18-24° als besonders vorteilhaft herausgehoben.

Zur Fixierung von Kugelgelenken sind verschiedene Systeme beispielsweise mit einer Hydraulik, Klemmringen (z. B. DE 32 39 208 A1), Federelementen (z. B. US 3,951,557) und Klemmen (z. B. US 4,765,580) bekannt. Gerade bei den Lösungsansätzen mit Klemmen konnte keine sichere Fixierung erstellt werden. Aufgrund der kleinen Angriffsfläche einer Klemme kann der erforderliche Kraftaufwand für die Fixierung nicht auf die Kugelfläche aufgebracht werden. In der CH 519 117 wird ein feststellbares Kugelgelenk offenbart, bei dem der Klemmdruck über ein Feststellorgan auf die Kugel übertragen wird und somit grössere Belastungen übernommen werden können.

Die bekannten Haltevorrichtungen für Bildschirme sind in der Praxis nur beschränkt auf unterschiedliche Gewichte einstellbar. In der Regel müssen Friktionsscheiben verwendet werden, weil eine vollständige Ausbalancierung der Federkraft einerseits und mit dem Bildschirmgewicht andererseits nicht erreicht wird (der Haltearm würde "nachlaufen"). Die erhöhte Bremswirkung im Gelenksystem hat zur Folge, dass der Arm weniger leichtgängig ist. Der Benutzer muss zum Verstellen des Neigungswinkels also mehr Kraft aufwenden.

Alle bekannten Systeme befriedigen die heutigen und zukünftigen Bedürfnisse nicht, welche an eine Apparate-Haltevorrichtung gestellt werden.

### Darstellung der Erfindung

Aufgabe der Erfindung ist es, eine Haltevorrichtung der eingangs genannten Art zu schaffen, welche in ihrem gesamten Schwenkbereich vom Benutzer schnell und einfach auf unterschiedliche Apparategewichte ausbalanciert werden kann und welche insgesamt leichtgängig ist.

Die Lösung der Aufgabe ist durch Merkmale des Anspruchs 1 definiert. Entsprechend dem Kern der Erfindung ist eine Federkraftkennlinie des elastischen Elements so gewählt, dass eine Maximalbelastungsabweichung $\Delta F(SKKmax - FKK)$ betragsmässig in der gleichen Grössenordnung liegt wie eine Minimalbelastungsabweichung $\Delta F$ (FKK - SKKmin). Die Maximalbelastungsabweichung $\Delta F(SKKmax - FKK)$ ist dabei die grösste Kraftdifferenz zwischen einer Maximal-Sollkraftkurve (SKKmax) für Maximalbelastung und der Federkraftkennlinie (FKK) im gesamten Neigungswinkel-Bereich. Unter der Minimalbelastungsabweichung $\Delta F(FKK - SKKmin)$ ist demgegenüber die grösste Kraftdifferenz zwischen der Federkraftkennlinie (FKK) und einer Minimal-Sollkraftkurve (SKKmin) für Minimalbelastung im gesamten Neigungswinkel-Bereich zu verstehen.

Mit der erfindungsgemässen Bemessungsregel werden "Drehmomentspitzen" innerhalb des Funktionsbereichs (welcher einerseits durch den Neigungswinkel-Bereich und andererseits durch den Gewichtsverstellbereich definiert ist) minimiert. Grundsätzlich ist es ja so, dass jede Abweichung zwischen der Sollkraftkurve und der Federkennlinie zu einem Drehmoment in die eine oder andere Richtung führt. Damit eine einstellbare Haltevorrichtung keinen "Nachlauf-Effekt" hat, muss die Friktion im Gelenksystem in jedem Fall so gross sein, dass die grösste (im gesamten Funktionsbereich des Haltearms auftretende) Abweichung zwischen Sollkraftkurve und Federkennlinie durch eine entsprechend höhere Friktion abgedeckt ist.

Das beste Ergebnis lässt sich erreichen, wenn die Maximalbelastungsabweichung ΔF(SKKmax - FKK) betragsmässig gleich gross ist wie die Minimalbelastungsabweichung ΔF(FKK - SKKmin). Diese Idealbedingung lässt sich aber in der Praxis meist nicht mit vernünftigem Aufwand präzis erreichen. Es genügt aber, wenn die beiden Grössen nicht mehr als 30% (insbesondere nicht mehr als 20%) voneinander abweichen und somit die gleiche Grössenordnung haben.

Durch die geneigte Anordnung der Verstellvorrichtung bleibt bei einer einmal eingestellten Belastung das Gleichgewicht über den gesamten Schwenkbereich der Haltevorrichtung gewährleistet. Dies auch bei der bevorzugten Ausbildung mit einer vorgespannten Schraubenfeder. Indem der Angriffspunkt auf einer vorgegebenen Achse verstellt wird, können mit ein und derselben Ausführungsform verschiedene Gewichtsbelastungen aufgenommen werden.

Durch den einfachen Aufbau der nach dem erfindungsgemässen Prinzip ausbalancierten Haltevorrichtung werden alle Anforderungen erfüllt, welche an eine solche gestellt werden. Anpassungen aufgrund einer wechselnden Belastung, beispielsweise durch einen neuen Flachbildschirm können von jedem Benutzer selbst, einfach und bei Beibehaltung der vorteilhaften Eigenschaften der Haltevorrichtung durchgeführt werden.

An dieser Haltevorrichtung kann jede Art eines Apparates befestigt werden, sofern die maximale Tragfähigkeit der Haltevorrichtung nicht überschritten wird. Die einzelnen Komponenten der Haltevorrichtung werden auf einen vorher definierten Gewichtsbereich ausgerichtet.

Bevorzugt werden an solchen Haltevorrichtungen Bildschirme und dabei insbesondere Flachbildschirme befestigt. Für solche ist ein Belastungsbereich in der Grössenordnung von einigen wenigen Dutzend N bis 100 N angemessen. Selbstverständlich kann die Erfindung auch für beliebige andere Apparate wie z. B. medizinische, messtechnische, etc. verwendet werden.

Es ist ein Merkmal der Erfindung, dass der Verstellachsenwinkel γ in Abhängigkeit vom Neigungswinkel-Bereich so gewählt sind, dass im vorgegebenen Neigungswinkel-Bereich die Maximalbelastungsabweichung ΔF(SKKmax - FKK) und die Minimalbelastungsabweichung ΔF(FKK - SKKmin) kleiner als 15%, insbesondere kleiner oder gleich 10% der mittleren Federkraft sind. Dies hat zur Folge, dass die Reibungskraft im Gelenksystem vernachlässigbar klein (z. B. 10 Mal kleiner) gehalten werden kann, was sich entsprechend gut auf die Leichtgängigkeit der Haltevorrichtung auswirkt.

Mit diesem Konstruktionskriterium können die weiter oben erwähnten "Drehmomentspitzen" zusätzlich reduziert werden. Weil die beiden Massnahmen bis zu einem gewissen Grad unabhängig voneinander wirken, können sie auch unabhängig voneinander angewendet werden.

Eine weitere Bemessungsregel, die hilft, die "Drehmomentspitzen" minimal zu halten, besteht darin, den Verstellachsenwinkel γ in Abhängigkeit vom Neigungswinkel-Bereich so zu wählen, dass im vorgegebenen Neigungswinkel-Bereich die Minimal-Sollkraftkurve (SKKmin) und die Maximal-Sollkraftkurve (SKKmax) im wesentlichen parallel verlaufen.

Je weniger die Sollkraftkurven parallel sind, umso stärker ausgeprägt können (z. B. am oberen oder unteren Ende des Neigungswinkel-Bereichs) "Drehmomentspitzen" auftreten. Der Verstellachsenwinkel γ und der Neigungswinkel-Bereich werden zudem vorteilhafterweise so gewählt, dass die Sollkraftkurven mehr oder weniger linear sind. Es kann dann für die Minimal- und die Maximal-Sollkraftkurve je eine Regressionsgerade berechnet und so die Parallelität näherungsweise bestimmt werden. Wenn die beiden Sollkraftkurven sehr nahe beieinander liegen, muss das Kriterium der Parallelität weniger gut eingehalten werden, ohne dass die "Drehmomentspitzen" kritisch werden.

Die Anwendung der oben erläuterten Prinzipien zeigt, dass der Verstellachsenwinkel (d. h. der Winkel zwischen der geneigten Verstellachse und der Lotrechten) mindestens 40° betragen sollte und vorzugsweise im Bereich von 45° bis 60° liegt.

Damit ist aber nicht gesagt, dass Ausführungsformen mit einem Verstellachsenwinkel, der etwas ausserhalb dieses Bereichs liegt, unbrauchbar sein müssen. Die relativen geometrischen Abmessungen haben nämlich ebenfalls einen gewissen Einfluss auf die Grösse der "Drehmomentspitzen", so dass in gewissen Fällen mögliche Nachteile von ausserhalb des bevorzugten Verstellachsen-Winkelbereichs liegenden Ausführungsformen vermieden werden können.

So ist z. B. die richtige Wahl des Neigungswinkel-Bereichs durchaus von Bedeutung. Es hat sich gezeigt, dass der Bereich bezogen auf eine horizontale Achse vorzugsweise von -10° bis +50° läuft. Wird die untere Grenze z. B. nach unten verschoben, kann sich auch der optimale Verstellachsenwinkel ändern. Der obere Grenzwert sollte nicht allzu nahe bei 90° sein.

Es kann durchaus von Bedeutung sein, wo das elastische Element an der Tragkonstruktion angreift. Vorteilhaft ist es, wenn am äusseren Ende des Führungsarms ein Anschlussgelenk angeordnet ist und wenn das elastische Element in diesem Anschlussgelenk mit dem Führungsarm gekoppelt ist. Wird die Kopplung zwischen Führungsarm und Federelement nach innen verschoben, erhöhen sich die "Drehmomentspitzen".

Wird einer der Befestigungspunkte des elastischen Elements verändert, ändert sich die Tragfähigkeit der gesamten Haltevorrichtung. Bei einer Änderung der Belastung der Haltevorrichtung wird diese mittels der Verstellvorrichtung wieder in das Gleichgewicht gebracht und die Haltevorrichtung ist wieder über den gesamten Neigungswinkelbereich ausbalanciert. Eine Änderung der Belastung kann sich beispielsweise bei einem Apparatewechsel ergeben. Bevorzugt wird die Verstellvorrichtung an dem Befestigungselement der Haltevorrichtung angeordnet. Durch diese Verstellvorrichtung bleibt die Haltevorrichtung auch über mehrere Generationen von Geräten insbesondere von Bildschirmen einsetzbar.

Eine bevorzugt ausgebildete Verstellvorrichtung für einen der Angriffspunkte des elastischen Elements besteht aus einer Gewindestange mit einer vorgegebenen Achse und einem Befestigungsteil, welches die Befestigung des elastischen Elements an der Verstellvorrichtung ermöglicht. Durch Drehen der Gewindestange wird die Lage des Befestigungsteils und somit die Lage des Angriffspunktes des elastischen Elementes entlang der Achse der Gewindestange verschoben. Dadurch wird die Haltevorrichtung auf die vorhandene Belastung eingestellt. Je länger die Gewindestange der Verstellvorrichtung ausgebildet ist, desto grösser ist der einstellbare Tragfähigkeitsbereich der Haltevorrichtung.

Als Alternative dazu kann auch das Befestigungsteil selbst mit einem Gewinde ausgebildet sein, welches eine Einstellung entlang der Gewindestange ermöglicht. Dabei wäre das elastische Element beispielsweise mit einem gebogenen Ende (Haken, Schlaufe) innerhalb einer Ausnehmung des Befestigungsteils befestigt, so dass das Befestigungsteil gedreht werden kann. Weiter kann auch das Befestigungsteil derart ausgebildet sein, dass es entlang der Gewindestange gleiten kann. Die genaue Position wird durch eine Mutter fixiert, welche auch ein Verstellen des Angriffspunktes des elastischen Elementes ermöglicht. Durch die Kraft, welche das elastische Element auf das Befestigungsteil ausübt, wird ein unerwünschtes Verschieben dessen weitgehend verhindert. In einer weiteren Variante wird anstatt einer Gewindestange ein normaler Stabstahl verwendet. Dieser ist gerillt oder vorzugsweise glatt ausgebildet und beispielsweise mit mehreren Bohrungen versehen. In diesen Bohrungen wird ein Bolzen eingesetzt. Der Bolzen weist beispielsweise eine Länge auf, die dem dreifachen Durchmesser des verwendeten Stabstahls entspricht. Daran wird das elastische Element beispielsweise wieder mit einem gebogenen Ende eingehängt. Anstatt den Stabstahl mit Bohrungen zu versehen kann dieser auch einseitige Ausnehmungen aufweisen, in denen das elastische Element mit einem gebogenen Ende eingehängt werden kann. Hierbei ist jedoch die Einstellung für den Gewichtsausgleich eingeschränkter als bei den vorher ausgeführten Varianten. Daneben sind weitere konstruktive Ausgestaltungen der Verstellvorrichtungen denkbar, solange zumindest einer der Befestigungspunkte des elastischen Elements verstellt werden kann.

Bevorzugt ist das elastische Element innerhalb der Tragkonstruktion diagonal angeordnet. Bei einer bevorzugten Ausgestaltung der Tragkonstruktion als Parallelogramm versteht sich die diagonale Anordnung von dem oberen Gelenkpunkt des Parallelogramms beispielsweise bei der Befestigung des Apparates, zu der Verstellvorrichtung, welche an dem unteren Befestigungselement angeordnet ist. Die Wirkungslinie des elastischen Elements führt dabei knapp unterhalb des unteren Gelenkpunktes bei dem Befestigungselement vorbei. Je nach konstruktiver Ausgestaltung der Tragkonstruktion wird der Winkel zwischen der Tragkonstruktion und der Wirkungslinie des elastischen Elements angepasst.

Die Tragfähigkeit der Haltevorrichtung hängt einerseits von der Art des elastischen Elementes, der Geometrie der Tragkonstruktion und andererseits von den Angriffspunkten des elastischen Elementes ab. Entsprechend der Veränderung eines Teils dieses Systems verändert sich die Tragfähigkeit der gesamten Haltevorrichtung.

An seinem einen Ende weist die Haltevorrichtung ein Befestigungselement auf, welches eine Befestigung der Haltevorrichtung an einem Möbelstück, an einer Stange oder etwas ähnlichem ermöglicht. Das Befestigungselement kann auch derart ausgebildet sein, dass die Haltevorrichtung direkt an einer Wand befestigt werden kann. In einer bevorzugten Ausführungsform ist dieses Befestigungselement jedoch derart ausgebildet, dass die gesamte Haltevorrichtung um eine vertikale Achse schwenkbar ist, welche beispielsweise durch das Befestigungselement verläuft.

Heutige Büroeinrichtungen gewähren den Benutzern eine hohe Flexibilität. Aus diesem Grund müssen auch sämtliche Zubehörteile insbesondere eines Büromöbelsystems diesem Anspruch genügen. So ist eine Befestigung des Befestigungselementes der erfindungsgemässen Haltevorrichtung beispielsweise mittels einer Klemme an einer Platte eines Arbeitstisches oder an einer vertikalen Stange denkbar. Dabei kann eine allgemein verwendbare, d. h. an handelsübliche Tische oder ähnlichem anbringbare oder eine spezielle Befestigungsmöglichkeit vorgesehen sein, welche nur auf ein bestimmtes Möbelsystem ausgerichtet ist.

Das Befestigungselement kann auch derart ausgebildet sein, dass die Tragkonstruktion um das Befestigungselement schwenkbar ist. In einer solchen Ausgestaltung wird das Befestigungselement vorzugsweise zweiteilig ausgebildet. Ein Teil, welcher beispielsweise fest mit einem Tisch verbunden ist und ein Teil, welcher an dem fest verbundenen Teil um eine vertikale Achse schwenkbar ist. Durch diese konstruktive Massnahme kann die Verstellvorrichtung weiterhin an dem Befestigungselement angeordnet sein und es ist keine zusätzliche Konstruktion nötig.

Damit eine optimale Höhenverstellung eines befestigten Apparates möglich ist und eine Kompaktheit der Konstruktion gegeben ist, wird die Tragkonstruktion vorzugsweise in Form eines Parallelogramms ausgestaltet.

Das eine Parallelenpaar wird durch zumindest zwei Arme und das andere Parallelenpaar wird durch oben und unten angeordnete Befestigungselemente gebildet. Die Arme und die Befestigungselemente sind vorzugsweise gelenkig miteinander verbunden. Dabei können die Arme aus U-förmigen oder kastenförmigen Metallprofilen gebildet sein. Daneben ist auch die Verwendung von Flachstahl, Rundprofilen oder Ähnlichem für die konstruktiven Elemente denkbar.

Der Gewichtsausgleich der Haltevorrichtung erfolgt durch das elastische Element. Von Vorteil handelt es sich dabei um ein Federelement, bevorzugt um eine Schraubenfeder. Daneben sind auch Ausführungen beispielsweise mit einem hydraulischen oder pneumatischen elastischen Element denkbar. Die Schraubenfeder kann prinzipiell durch jedes elastische Element ersetzt werden, welches eine ähnliche oder eine gleiche Funktion wie diese Schraubenfeder übernimmt. Damit auch hohe Belastungen mittels einer solchen Haltevorrichtung übernommen werden können, kann auch mehr als ein elastisches Element pro Haltevorrichtung vorgesehen werden.

Bei einer bevorzugten Ausbildung mit einer Schraubenfeder wird diese bei der konstruktiven Ausgestaltung der Tragkonstruktion als Parallelogramm wie bereits beschrieben, diagonal im Gelenkparallelogramm angeordnet. Das eine Ende der Schraubenfeder wird an der oberen gelenkigen Befestigung des oberen Armes an dem Befestigungselement für den Apparat gelenkig angebracht. Die Befestigung des anderen Endes der Schraubenfeder erfolgt ebenfalls gelenkig an einer nachfolgend beschriebenen Verstelleinrichtung, welche diagonal gegenüber dem oberen Befestigungspunkt der Schraubenfeder an dem Befestigungselement angeordnet ist.

Vorzugsweise ist die Schraubenfeder vorgespannt. Die Vorspannkraft ist von der gewünschten Tragfähigkeit der Haltevorrichtung und der Lage von diesem abhängig. Für die bevorzugte Tragfähigkeit bis etwa 10 kg beträgt die Vorspannung der Schraubenfeder in der unteren (angespannten) Position etwa doppelt so viel, wie im hochgeschwenkten (entspannten) Zustand der Haltevorrichtung.

Hauptsächlich werden an der erfindungsgemässen Haltevorrichtung Apparate und insbesondere Bildschirme befestigt. Grundsätzlich kann ein solcher Apparat direkt an einem Befestigungselement angebracht werden. In einer bevorzugten Variante wird der Apparat an der Kugel eines Kugelgelenks befestigt. Dabei wird für die Befestigung des Apparates an der Kugel des Kugelgelenks eine Befestigungsvorrichtung angeordnet, welche vorzugs weise aus einer Befestigungsplatte und einem Befestigungsstift besteht. Der Befestigungsstift ist seinerseits mit der Kugel des Kugelgelenks kraftschlüssig verbunden und dies bevorzugt derart, dass nur die von der Konstruktion des Kugelgelenks vorgesehenen Bewegungsfreiheiten durchführbar sind. Vorzugsweise handelt es sich bei der Befestigungsplatte um eine normierte Metallplatte, welche vorbereitete Bohrungen für die Befestigung der marktüblichen Produkte aufweisen.

Bevorzugt wird am einen Ende der Tragkonstruktion gegenüber dem Befestigungselement ein Kugelgelenk angeordnet. Dadurch ist es möglich, drei Gelenke in einem zu vereinigen und Bewegungen mit drei rotatorischen Freiheitsgraden zu ermöglichen. Damit ist ein daran befestigter Apparat um die horizontale und vertikale Achse schwenkbar. Des Weiteren ist eine Drehung senkrecht zur Ebene des Apparates möglich. Dies wird vor allem im grafischen Bereich gewünscht, wenn ein grundsätzlich auf Querformat eingestellter Bildschirm um die Rotationsachse der Befestigung auf Hochformat gedreht werden kann. Um eine vom Benutzer eingerichtete Stellung beizubehalten ist das Kugelgelenk mit zumindest einer Fixiervorrichtung ausgestattet, welche vorzugsweise zweiteilig aufgebaut ist.

Bei Kugelgelenken stellt sich bei der Fixierung eines eingestellten Zustandes ein besonderes Problem, wenn an der Kugel eine Belastung wirkt. Denn oft ist die wirkende Kraft, welche aus einer Belastung resultiert, auf eine zu fixierende Kugel derart gross, dass eine Gegenkraft, welche beispielsweise mittels einer Schraube auf die Kugel eines Kugelgelenks aufgebracht wird, zur Fixierung dieser Kugel nicht ausreicht. Bisher wurde die Sicherung von Kugelgelenken im allgemeinen mit Friktionsscheiben oder ähnlichem gelöst.

Indem gemäss einer bevorzugten Ausführungsform der Erfindung zwei Druckkörpern angeordnet sind, ist ein Reibungswiderstand derart vorhanden, dass eine sichere Fixierung gewährleistet ist. Diese Druckkörper werden vorzugsweise aus druckfestem Kunststoff hergestellt und weisen eine rohrähnliche Form auf. Bevorzugt sind diese Druckkörper in ihrer Wirkungslinie entgegengesetzt angeordnet. Ein Justierkörper, vorzugsweise eine Schraube, wirkt auf einen Druckkörper und gleichzeitig auf den gegenüber angeordneten Druckkörper, welche ihrerseits auf die zu fixierende Kugel wirken. Durch diesen Aufbau kann die Angriffsfläche einer Schraube auf eine Kugel derart vergrössert werden, dass trotz der relativ kleinen Angriffsfläche der Schraube eine Fixierung des Kugelgelenks auch bei einer grösseren Belastung gewährleistet wird. Neben der Ausführung der Druckkörper mit einer rohrähnlichen Form ist auch eine Ausgestaltung des Druckkörpers als ein kreiszylindrischer Körper mit einer auf die Kugel abgestimmten sphärischen konkaven Kontaktfläche denkbar.

Bevorzugt wird die Fixiervorrichtung so ausgebildet, dass die Feststellschraube von oben angezogen werden kann. In einer solchen Ausführung ist die Feststellschraube meistens leicht zugänglich. Die Fixiervorrichtung kann auch von unten oder von der Seite beispielsweise in einem x-beliebigen Winkel angeordnet werden. Die Anordnung der Fixiervorrichtung in vertikaler Richtung ist jedoch einer Anordnung in horizontaler Richtung vorzuziehen, da die Belastung infolge eines befestigten Apparates im Wesentlichen auch vertikal wirkt. Durch den daraus resultierenden markant längeren Hebelarm bei einer vertikalen Anordnung können bei gleicher Grösse der Haftreibung grössere Drehmomente aufgenommen werden. Damit können die Abmessungen der einzelnen Bestandteile im Vergleich zu einer horizontalen Anordnung der Fixiervorrichtung klein gehalten werden und der Verschleiss ist entsprechend kleiner.

Durch die vorhandenen Freiheitsgrade des Kugelgelenks kann auf benutzerspezifische Wünsche genügend Rücksicht genommen werden, auch wenn keinerlei Möglichkeiten bestehen die Haltevorrichtung selbst zu verschwenken. Um die Flexibilität zu erhöhen, kann die Haltevorrichtung derart ausgebildet werden, dass sie von dem Benutzer weg bzw. zu dem Benutzer hin verstellt werden kann oder sogar eine Verschiebungsmöglichkeit zur Seite aufweist.

In einer Alternative zu der oben beschriebenen Ausbildung der Fixierung wird das Kugelgelenk mit zumindest einer Fixiervorrichtung ausgestattet, welche eine Grob- und Feinfixierung ermöglicht. Damit kann eine zusätzliche Sicherheit, insbesondere bei höheren Belastungen gewährleistet werden.

Eine andere Ausführungsform der Fixiervorrichtung für das Kugelgelenk weist mehrfach wirkende Elemente auf. Einerseits einen ersten Druckkörper, der vorzugsweise aus druckfestem Kunststoff hergestellt ist und eine rohrähnliche Form aufweist. Zur Erhöhung der Fixiereigenschaften, insbesondere der Verstärkung der hemmenden Reibungskräfte auf die Kugeloberfläche, kann an diesem ersten Druckkörper ein Kreisring angeordnet sein, welcher den gleichen Durchmesser wie der erste Druckkörper aufweist. Der Kreisring ist vorzugsweise aus einem elastischen Kunststoff hergestellt und leicht verformbar. Auf den ersten Druckkörper wirkt eine Justierschraube, weiche eine durchgehende Bohrung aufweist. Diese erste Fixiervorrichtung dient im Wesentlichen der Grobfixierung des Kugelgelenks.

Zur Schaffung einer Feinjustierung ist innerhalb der ersten Fixiervorrichtung eine zweite Vorrichtung angeordnet. Diese besteht aus einem zweiten Druckkörper, der bevorzugt aus einem elastischen Kunststoff hergestellt und in Form einer Scheibe ausgebildet ist, welche dem Innendurchmesser des rohrförmigen ersten Druckkörpers entspricht. An diesem zweiten Druckkörper greift eine zweite Schraube an, welche derart ausgebildet ist, dass diese durch die Bohrung der ersten Justierschraube auf diesen zweiten Druckkörper wirkt. Die durch die erste Justierschraube gehende Bohrung kann teilweise oder ganz mit einem Innengewinde versehen sein. Damit kann die zweite Justierschraube direkt an der ersten angreifen. Die zweite Justierschraube kann aber auch derart ausgebildet sein, dass sie als Bolzen in einer exzentrisch ausgebildeten Bohrung der ersten Justierschraube verkeilt wird.

Vorzugsweise wird an einer erfindungsgemässen Haltevorrichtung ein Bildschirm und insbesondere ein Flachbildschirm angebracht. Dies bedingt eine Zuführung mindestens eines Kabelstrangs. Um ein Aufwickeln dieses Kabelstrangs zu verhindern wird bevorzugt die Einstellmöglichkeit des Kugelgelenks zumindest um die Rotationsachse beispielsweise mit Festanschlägen beschränkt. Die Bewegungsfreiheit ist vorzugsweise auf eine Drehung von 90°, gegebenenfalls auf zweimal 90°, zu begrenzen.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1 Eine Ansicht von der Seite einer erfindungsgemässen Haltevorrichtung;

Fig. 2 einen Schnitt durch eine erfindungsgemässe Verstellvorrichtung;

Fig. 3 eine geometrische Prinzipskizze zur Erläuterung der Parameter;

Fig. 4 eine Darstellung der Sollkraftkurven und der Federkraftkennlinie;

Fig. 5 eine Darstellung der Kraftdifferenz $\Delta F$ (=DeltaF) zwischen einem bestimmten Messpunkt und der ausgewählten Federkennlinie;

Fig. 6 eine Explosionsschnittzeichnung des Kugelgelenks;

Fig. 7 eine Explosionszeichnung einer Variante des Kugelgelenks.

Grundsätzlich sind in den Figuren gleiche Teile mit gleichen Bezugszeichen versehen.

**Wege zur Ausführung der Erfindung**

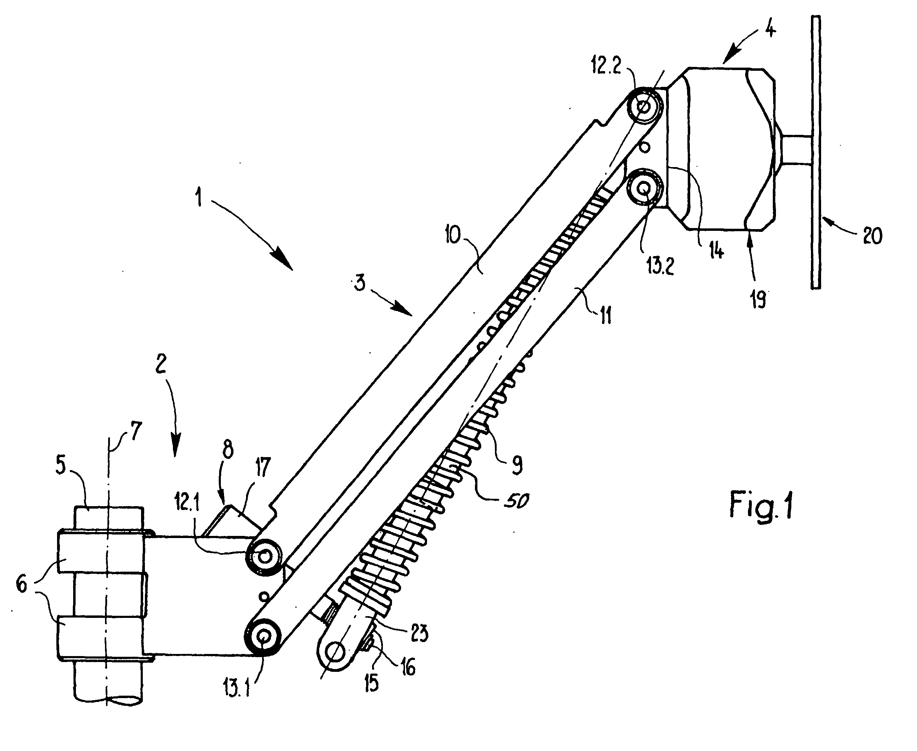

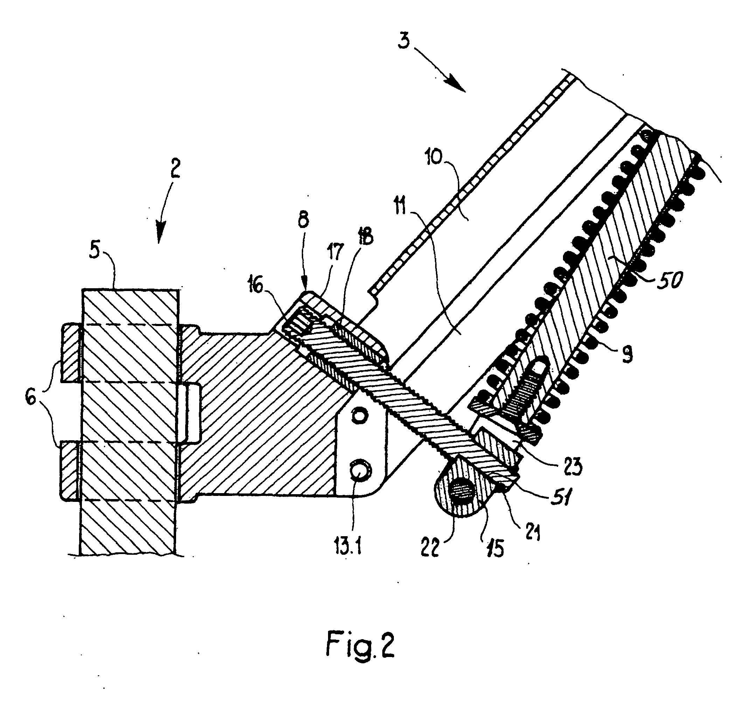

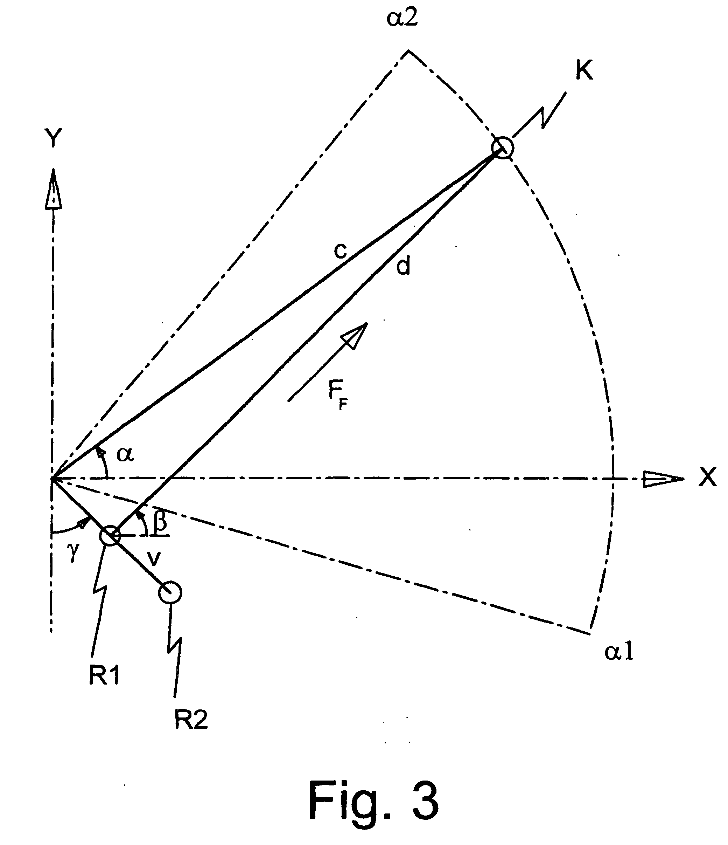

Nachfolgend wird zuerst ein bevorzugtes Ausführungsbeispiel anhand der Fig. 1 und 2 erläutert. Danach folgt die Erklärung des verwendeten Bemessungsprinzips anhand der Figuren 3 bis 5.

Figur 1 stellt eine Ansicht von der Seite einer erfindungsgemässen Haltevorrichtung 1 dar. Diese umfasst ein Befestigungselement 2 zur Befestigung der Haltevorrichtung 1, eine Tragkonstruktion 3 und ein Befestigungselement 4 für die Befestigung eines Apparates. Bei dem zu befestigenden Apparat handelt es sich vorzugsweise um einen Bildschirm und insbesondere um einen Flachbildschirm.

Das Befestigungselement 2 ist derart ausgebildet, dass die Haltevorrichtung an einem Arbeitsplatz angebracht werden kann. Dieses Mittel zur Befestigung kann einerseits eine Klemmenkonstruktion sein, welche beispielsweise eine Befestigung direkt an einer Tischplatte ermöglicht. Bei einer solchen Befestigungsart kann das Befestigungselement 2 auch zweiteilig ausgebildet sein. Dabei ist ein Teil des Befestigungselements 2 fest, beispielsweise mit einer Tischplatte verbunden und ein anderer Teil des Befestigungselements 2 ist gelenkig daran befestigt. Andererseits kann beispielsweise wie in der Figur 1 dargestellt ein Tischbein derart über die Tischplatte verlängert werden, dass die Haltevorrichtung daran befestigt werden kann. Für eine solche Art der Befestigung weist das Befestigungselement 2 einen ösenförmigen Teil 6 auf, welcher monolithisch mit dem restlichen Teil des Befestigungselementes 2 verbunden ist und ein Überstülpen des Befestigungselementes 2 über die Verlängerung des Tischbeins 5 ermöglicht. Dadurch ist es möglich, die Haltevorrichtung 1 um eine vertikale Achse 7 zu schwenken, welche durch die Verlängerung des Tischbeins 5 läuft.

An dem mit dem ösenförmigen Teil 6 monolithisch verbundenen Teil des Befestigungselements 2 ist die Tragkonstruktion 3 gelenkig angeordnet. Des Weiteren ist vorzugsweise an diesem Teil des Befestigungselements 2 die Verstelleinrichtung 8 für einen der Angriffspunkte der Schraubenfeder 9 angebracht. Die Schraubenfeder 9 ist auf einem längenveränderlichen Element 50, beispielsweise einem Teleskopzylinder, geführt, wobei ein erster Teil in einem zweiten Teil verschiebbar gelagert ist und so innerhalb der gewünschten Grenzen die längenveränderliche Eigenschaft des Elementes 50 ermöglicht.

Die Tragkonstruktion 3 besteht aus zwei Profilen 10 und 11, welche über ihre gelenkigen Verbindungen mit den Befestigungselementen 2 und 4 ein Parallelogramm bilden. Vorzugsweise sind die Profile 10 und 11 mittels auswechselbaren Bolzen 12 und 13 gelenkig an den Befestigungselementen 2 und 4 befestigt. Das obere Profil 10 ist einerseits mit dem Befestigungselement 2 und andererseits mit dem Befestigungselement 4 im oberen Bereich dieser Befestigungselemente 2 und 4 gelenkig verbunden. Das untere Profil 11 ist parallel zu dem oberen Profil 10, unterhalb von diesem gelenkig mit den Befestigungselementen 2 und 4 befestigt. Das untere Profil 11 weist vorzugsweise an den Befestigungspunkten die gleiche Breite wie das obere Profil 10 auf und umgreift das entsprechende Befestigungselement 2 bzw. 4 in der gleichen Art wie das Profil 10 gabelartig. Durch die Verwendung einer parallelogrammartigen Konstruktion wird eine kompakte Ausführung der Haltevorrichtung 1 und eine ausgezeichnete mechanische Stabilität erreicht.

Eine besonders belastbare und kompakte Ausbildung der Haltevorrichtung 1 ist gegeben, wenn die Profile 10 und 11 je nach Stellung der Haltevorrichtung 1 ineinandergreifen können. Dazu werden vorzugsweise U-förmige Profile verwendet. Dabei wird das untere U-Profil 11 in der Nähe der Befestigungselemente 2 und 4 um etwas mehr als die Wandstärke des oberen U-Profils 10 beidseitig nach innen abgekantet. Solche Abkantungen sind vorzugsweise so nah bei den Befestigungselementen angeordnet, dass keine Verkantung zwischen den Befestigungselementen 2 und 4, sowie dem unteren U-Profil 11 eintritt. Das obere U-Profil 10 weist an den beiden Längsenden seitlich beidseitig Ausnehmungen auf. Die Höhe der Ausnehmungen entspricht in etwa der halben Höhe des U-Profils 10. Die Grösse der Länge der Ausnehmungen ist derart gewählt, dass beim Berühren der gabelartigen Halterungen der beiden U-Profile 10 und 11 in dem oberen und unteren Schwenkbereich die Abkantungen die Kante nicht berühren. Durch die gabelartigen Laschen der U-Profile 10 und 11 wird der Schwenkbereich in vertikaler Richtung konstruktiv begrenzt.

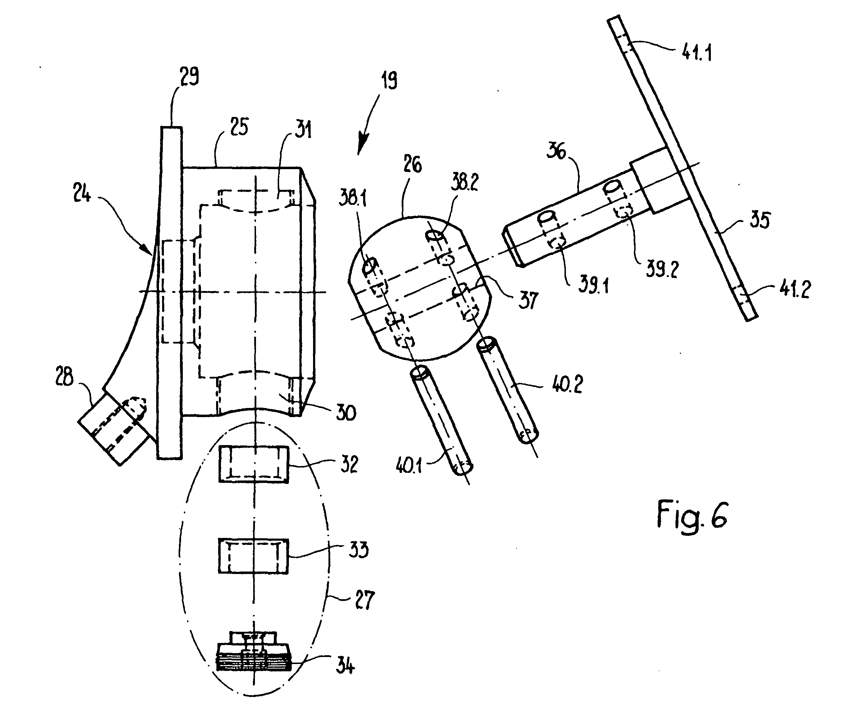

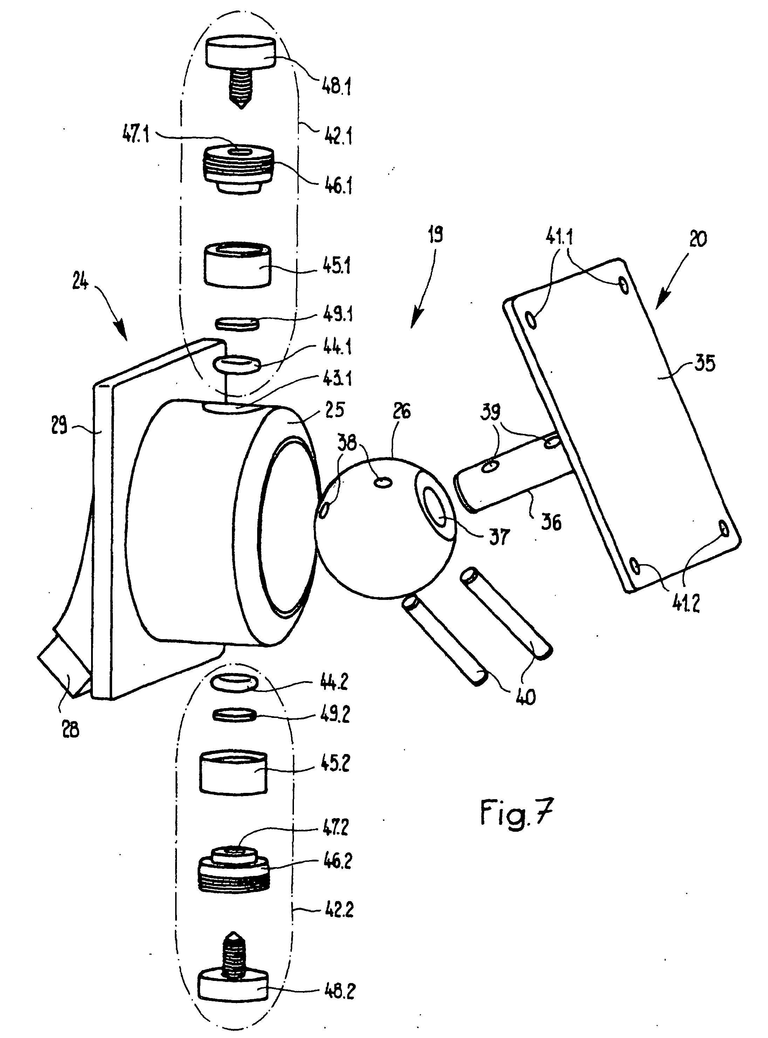

Das Befestigungselement 4 zur Befestigung eines Apparates kann derart ausgebildet sein, dass an der Frontseite 14 des Befestigungselements 4 der gewünschte Apparat beispielsweise direkt angeschraubt werden kann. Mit dieser Ausführungsform sind die Einstellmöglichkeiten des Apparates jedoch auf eine Ausrichtung um die vertikale Achse 7 des verlängerten Tischbeins 5 und auf eine horizontale Ausrichtung beschränkt, welche durch den Schwenkbereich der parallelogrammartigen Tragkonstruktion 3 begrenzt werden. Ein Verschwenken des Apparates um die horizontale und vertikale Achse der Befestigung ist nicht möglich. Es wird deshalb bei einer bevorzugten Ausgestaltung der erfindungsgemässen Haltevorrichtung 1 an der Frontseite 14 ein Kugelgelenk 19 mit einer Befestigungsvorrichtung 20 zur Befestigung des Apparates angeordnet. Dieses Kugelgelenk 19 und die Befestigungsvorrichtung 20 werden mit ihren Einzelteilen detailliert in der Figur 6 bzw. 7 dargestellt.

Damit die Haltevorrichtung 1 in seinem gesamten Schwenkbereich ausbalanciert ist, wird an der eigentlichen Tragkonstruktion 3 der Haltevorrichtung 1 eine Schraubenfeder 9 angeordnet. Diese Schraubenfeder 9 ist einerseits an dem Bolzen 12.2 und andererseits an der Halterung 15 jeweils gelenkig befestigt. Die Verstelleinrichtung 8 befindet sich in einer bevorzugten Ausführungsform diagonal gegenüber dem Bolzen 12.2 an dem Befestigungselement 2.

Durch die Verstelleinrichtung 8 kann für einen bestimmten Gewichtsbereich über den gesamten Schwenkbereich der Haltevorrichtung 1 ein ausbalanciertes Verhalten dieser Haltevorrichtung 1 gewährleistet werden. Dies bleibt auch bei einem Auswechseln des befestigten Apparates und einer daraus ändernden Belastung gewährleistet. Je höher die Belastung ist, desto stärker muss folglich in der Hauptsache die Belastbarkeit der Schraubenfeder 9 sein. Damit Apparategewichte bis etwa 100 N von der Haltevorrichtung 1 übernommen werden können, wird die Schraubenfeder 9 vorgespannt. Die wirkende Vorspannkraft liegt je nach Position der Haltevorrichtung 1 bei einer im oben genannten liegenden Belastung im Bereich von etwa 400 N bis 750 N. Nachdem ein Flachbildschirm an dem Befestigungselement 4 angebracht worden ist, wird die Lage des Angriffspunkts der Schraubenfeder 9 mittels der Verstellvorrichtung 8 auf die vorhandene Belastung abgestimmt. Auch wenn in Zukunft die Flachbildschirme sehr viel leichter werden als die heute erhältlichen, so bleibt ein solche Haltevorrichtung 1 weiterhin einsetzbar.

Das Befestigungselement 2 weist vorzugsweise im oberen Drittel bezogen auf die gesamte Höhe dieses Elements eine Halterung 17 zur Aufnahme der Gewindestange 16 der Verstellvorrichtung 8 auf. Die Neigung der Gewindestange 16 ist fest vorgegeben und dahingehend optimiert, dass eine einmal eingestellte Belastung über den gesamten Schwenkbereich ausbalanciert ist. Der Winkel zwischen der Lotrechten und der Achse der Gewindestange 16 beträgt in der in den Figuren dargestellten Ausführung 53°. Je nach Ausbildung der Haltevorrichtung 1, insbesondere der Tragkonstruktion 3, kann dieser Winkel variieren.

Die richtige Wahl des Verstellachsenwinkels ist im Wesentlichen dafür verantwortlich, dass die Halterung im ganzen Neigungswinkel-Bereich ausbalanciert ist und trotzdem leichtgängig bleibt. Die erfindungsgemässen Bemessungskriterien werden weiter unten im Zusammenhang mit den Figuren 3 bis 5 erläutert.

Figur 2 zeigt einen Schnitt durch die Haltevorrichtung 1, insbesondere durch die Verstellvorrichtung 8. Die Halterung 17 weist eine Ausnehmung auf, in der eine Messinggewindebüchse 18 angeordnet ist. Durch diese konstruktive Ausbildung wird verhindert, dass sich die Gewindestange 16, welche aus Stahl hergestellt ist, mit dem Befestigungselement 2 verklemmt, welches vorzugsweise aus Aluminiumdruckguss hergestellt wird. Die Gewindestange 16 weist an ihrem bei der Halterung 17 liegenden Ende ein Mittel auf, welches ein Drehen der Gewindestange 16 ermöglicht. In der vorliegenden Ausführungsform ist eine Vertiefung für einen Imbusschlüssel vorgesehen. Es könnte aber auch eine Vertiefung für einen Schraubenzieher oder gar eine Kurbel vorgesehen sein. Am gegenüberliegenden Ende der Gewindestange 16 ist die Halterung 15 für die Schraubenfeder 9 vorzugsweise unverschieblich angebracht. Die Halterung 15 wird vorzugsweise auf dem dementsprechend vorbereiteten Ende der Gewindestange 16 gelagert. Die Halterung 15 weist zu diesem Zweck eine Bohrung 51 auf, in welcher das Ende der Gewindestange 16 drehbar angeordnet ist. Die Halterung 15 ist mit einem Sicherungsring 21 am Ende der Gewindestange gesichert. Des Weiteren könnte die gesamte Halterung 15 verschieblich gestaltet und beispielsweise in einer solchen Ausführung der Sicherungsring 21 durch eine Mutter ersetzt werden.

Wird die Gewindestange 16 gedreht, verändert sich die Lage der Halterung 15 dementsprechend. Wird ein Apparat an der Haltevorrichtung 1 befestigt, wird die Lage der Halterung 15 derart justiert, dass die Haltevorrichtung 1 über ihren gesamten Schwenkbereich ausbalanciert ist. Infolge der gelenkigen Lagerung der Schraubenfeder 9 an der Halterung 15, passt sich die Schraubenfeder 9 bei einer Veränderung des Angriffspunktes selbst an. Ändert sich zu einem späteren Zeitpunkt die Belastung, welche auf die Haltevorrichtung 1 wirkt, kann mit einer erneuten Justierung der Haltevorrichtung 1 durch den Benutzer selbst die Haltevorrichtung 1 den neuen Gegebenheiten angepasst werden.

In der bevorzugten Ausführungsform der Halterung 15 weist das elastische Element, hier die Schraubenfeder 9, ein gabelförmiges Anschlussstück 23 auf. Dieses ist mit Öffnungen versehen, welche mit einer Öffnung in der Halterung 15 korrespondieren und eine gelenkige Befestigung der Schraubenfeder 9 an der Verstellvorrichtung 8 bzw. der Gewindestange 16 über den Bolzen 22 ermöglicht.

In Fig. 3 ist die Geometrie der wesentlichen Teile der Halterung dargestellt. Im Ursprung des Koordinatensystems liegt die Drehachse für die vertikale Schwenkbewegung. D. h. der Ursprung entspricht der Achse des in Fig. 1 gezeigten Bolzens 12.1. Der Arm c entspricht dem oberen Profil 10 in Fig. 1 und der Endpunkt K dem Bolzen 12.2. Der (längenveränderliche) Schenkel d symbolisiert die Feder 9 (bzw. die Achse des längenveränderlichen Elements 50, auf dem die Feder 9 geführt ist). Die Position des Arms c wird durch den Winkel $\alpha$ zur x-Achse (d. h. zur Horizontalen) definiert. Der Neigungswinkel $\alpha$ kann zwischen dem unteren Anschlag $\alpha1$ (z. B. -10°) und dem oberen Anschlag $\alpha2$ (z. B. +50°) frei variieren. Das Verhältnis der Länge des Schenkels c zur Lage der Position R1 bzw. R2 auf der Verstellachse liegt vorzugsweise im Bereich zwischen 1:10 und 1:5.

Die Verstellachse v entspricht der Gewindestange 16 in Fig. 1 und hat einen festen Winkel $\gamma$ zur y-Achse (d. h. zur Lotrechten). Der Abstützpunkt des Schenkels d auf der Verstellachse kann zwischen den Extrempositionen R1 und R2 beliebig eingestellt werden. R1 bezeichnet dabei die Position für die Minimalbelastung des Haltearms und R2 die Position für die Maximalbelastung. Schliesslich ist in Fig. 3 die Federkraft $F_F$ eingezeichnet.

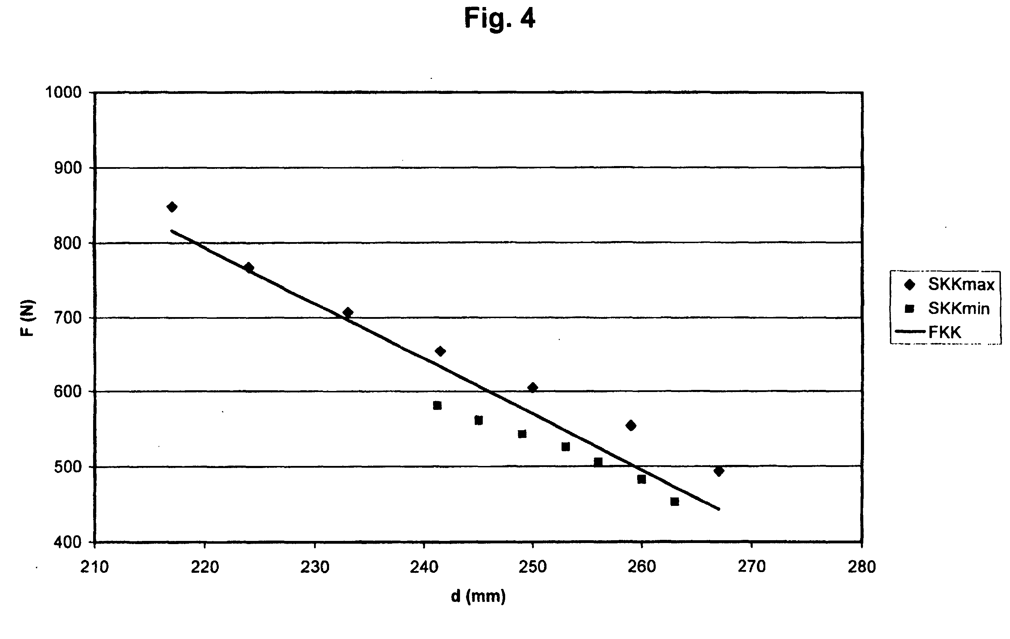

Die Sollkraftkurven für die Minimalbelastung einerseits (im Folgenden mit SKKmin bezeichnet) und für die Maximalbelastung andererseits (im Folgenden mit SKKmax bezeichnet) ergeben sich - für die anhand der Fig. 1 und 2 im Detail beschriebene bevorzugte Ausführungsform - aus Fig. 4. Unter der Sollkraftkurve wird die spezifische Abhängigkeit der zur Ausbalancierung erforderlichen Federkraft verstanden. Dabei ist als Variable nicht der Neigungs-

winkel $\alpha$ sondern die damit korrespondierende Länge des Schenkels d verwendet worden.

Der Kern der Erfindung besteht nun darin, die Geometrie so zu wählen, dass die Sollkraftkurven einerseits innerhalb gewisser Grenzen liegen (d. h. "möglichst nahe beieinander liegen"), und andererseits eine Feder mit einer Kennlinie einzusetzen, die so genannte "Drehmomentenspitzen" vermeidet.

Die Sollkraftkurven SKKmin und SKKmax berechnen sich in Abhängigkeit von der als Belastung angehängten Masse mB wie folgt:

$$SKK_{min} = F_F(m_{B_{min}})$$

$$SKK_{max} = F_F(m_{B_{max}})$$

$$F_F(m_B) = 9.81 \frac{\frac{m_A}{2} + m_K\left(\frac{b}{c} + 1\right) + m_B\left(\frac{a+b}{c} + 1\right)}{\sin\beta - \tan\alpha\cos\beta}$$

mBmin ist die geringste Belastungsmasse, die am Haltearm noch angehängt werden kann, ohne dass die Ausbalancierung verloren geht. Der untere Abstützpunkt des Schenkels d ist dann in der Position R1. Die maximale Belastungsmasse ist mBmax. Bei dieser ist der Abstützpunkt des Schenkels d in der Position R2. Die geometrischen Grössen *a, b* und *c* und die verschiedenen Massen sind wie folgt definiert:

*a* = Abstand (in x-Achsenrichtung) des Schwerpunkts des angehängten Bildschirms vom Schwerpunkt des Kopfes (Befestigungselement 4);

*b* = Abstand (in Richtung des Arms c) des Schwerpunkts des Kopfes vom Endpunkt K;

*c* = Länge des Arms c.

*mA* = Masse des Arms c

*mB* = Masse des Bildschirms.

*mK* = Masse des Kopfes

Der Zusammenhang zwischen den Winkeln $\alpha$ und $\beta$ ist eindeutig durch den unteren Absützpunkt rv = R1 bzw. rv = R2, die Länge des Schenkels c und durch den Winkel $\gamma$ bestimmt.

In Fig. 4 sind als Beispiel für $\gamma$=50° die Werte von SKKmin und SKKmax für $\alpha$ = -10°, ..., +50° dargestellt. Auf der Abszisse ist die Länge des Schenkels d der zugrundeliegenden konkreten Konstruktion (in Millimeter) und auf der Ordinate die Federkraft (in N) dargestellt. Beide Kurven SKKmin und SKKmax sind im ausgewählten Neigungswinkelbereich mehr oder weniger linear und parallel. Bei einem Haltearm der erfindungsgemässen Art geht es nun darum, eine Federkennlinie zu wählen, die im gesamten Neigungswinkel-Bereich möglichst geringe Abweichungen von SKKmin und SKKmax hat. Die Abweichung wird dabei als Kraftdifferenz $\Delta$F ("Delta F") bei einem bestimmten Winkel $\alpha$ (und damit einer bestimmten Federlänge des Schenkels d) verstanden. Ist eine solche Federkennlinie ermittelt, kann die entsprechende Feder beschafft bzw. produziert und in der Haltevorrichtung eingesetzt werden.

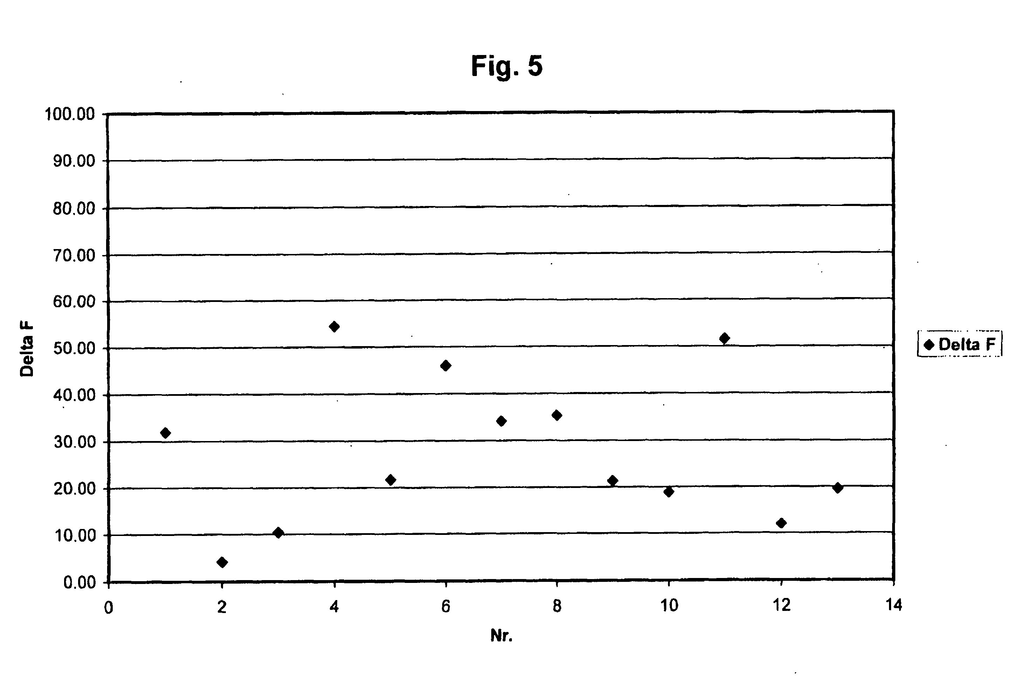

Gemäss der Erfindung ist die Federkennlinie nun so festgelegt, dass eine Maximalbelastungsabweichung $\Delta$Fmax = Max($\alpha$=-10° .... + 50°| SKKmax - FKK) betragsmässig in der gleichen Grössenordnung liegt wie eine Minimalbelastungsabweichung $\Delta$Fmin = Min($\alpha$=-10° .... + 50°| FKK - SKKmin). Dies lässt sich anhand der Fig. 5 erläutern. Auf der Abszisse sind die verschiedenen Messpunkte aufgetragen und auf der Ordinate die Kraftdifferenz $\Delta$F (=DeltaF) zwischen einem bestimmten Messpunkt und der ausgewählten Federkennlinie. Es ist erkennbar, dass die Kraftdifferenz je nach Messpunkt in einem Bereich zwischen 0 und 55 N variiert. Wichtig ist nun, dass die grössten Kraftdifferenzen in der gleichen Grössenordnung liegen. Im vorliegenden Fall sind der Messpunkt Nr. 4 und der Messpunkt Nr. 11 beinahe gleich gross. Das heisst die beiden grössten Kraftdifferenzen unterscheiden sich nur wenig. Zudem liegen die genannten grössten Kraftdifferenzen innerhalb einer Bandbreite von +/-10 % bezogen auf den Mittelpunkt der Federkennlinie. Dies bedeutet in der Praxis, dass ohne zusätzliche Friktionsscheiben gewährleistet werden kann, dass der Haltearm im ganzen Neigungswinkelbereich und für alle zulässigen Belastungen ausbalanciert ist.

Es gibt verschiedene Möglichkeiten, die Federkennlinie so zu wählen, dass die maximalen Kraftdifferenzen etwa gleich gross sind (dass also keine ausgeprägten "Drehmomentspitzen" auftreten). Beispielsweise kann mit einer linearen Regression gearbeitet werden. Denkbar ist auch, dass ein Optimierungsverfahren konzipiert wird, welches auf der Basis der Absolutwerte die beiden grössten Kraftdifferenzen in die gleiche Grössenordnung bringt und allenfalls noch eine Korrektur des Kennlinienverlaufs dahingehend zulässt, dass eine tatsächlich auf dem Markt bereits vorhandene Spiralfeder (welche vielleicht nicht dem idealen Kennlinienverlauf entspricht) ebenfalls zu einem guten Ergebnis führt.

Anhand der Figur 6 wird eine bevorzugte Ausführung eines Kugelgelenks 19 mit einer Befestigungsvorrichtung 20 für eine Befestigung beispielsweise eines Flachbildschirms in Form einer Explosionsschnittzeichnung dargestellt. Das gesamte Kugelgelenk 19 umfasst ein Kupplungsstück 24, eine Kugelpfanne 25, eine Kugel 26 sowie eine Fixiervorrichtung 27, welche aus zwei gegeneinander gerichteten Druckkörpern 32 und 33 besteht.

Das Kupplungsstück 24 seinerseits weist ein Befestigungselement 28 auf, welches eine Befestigung an dem Befestigungselement 4 der Haltevorrichtung 1 ermöglicht, und eine Halteplatte 29, an welcher die Kugelpfanne 25 angebracht ist. Es ist auch eine Ausführungsform denkbar, bei der das Befestigungselement 28 derart ausgebildet ist, dass die beiden Profile 10 und 11 der Tragkonstruktion 3 direkt an diesem befestigbar sind. Der Vorteil der ersten Variante liegt in einer Auswechselbarkeit des Kupplungsstückes, was dem Benutzer eine grössere Flexibilität bietet. So könnten je nach Art des befestigten Apparates verschiedene Befestigungselemente mit verschiedenen Funktionen angekuppelt werden.

An der Halteplatte 29 ist in diesem Ausführungsbeispiel auf der einen Seite die Kugelpfanne 25 des Kugelgelenks 19 und auf der anderen Seite das Befestigungselement 28 angebracht. Die Kugelpfanne 25 des Kugelgelenks 19 ist vorzugsweise rohrförmig ausgebildet und an einem Ende kraftschlüssig an der Halteplatte 29 befestigt. Diese kraftschlüssige Verbindung kann beispielsweise geschweisst sein. An dem gegenüberliegenden Ende ist die Kugelpfanne 25 derart ausgebildet, dass diese die Kugel 26 aufnimmt, welche innerhalb der Kugelpfanne 25 gleitet. Für die Fixiervorrichtung 27 ist in der Kugelpfanne 25 eine Öffnung 30 und gegenüber dazu angeordnet eine Ausnehmung 31 vorgesehen. Die Öffnung 30 wird vorzugsweise mit einem Innengewinde versehen an dem die Feststellschraube 34 angreifen kann.

Die Fixiervorrichtung 27 besteht aus einem ersten Druckkörper 32, welcher in der Ausnehmung 31 angeordnet ist, einem zweiten Druckkörper 33 und einer Feststellschraube 34. Die Kugel 26 wird zwischen diesen Druckkörpern 32 und 33 eingeklemmt, wenn die Feststellschraube 34 angezogen wird. Dafür ist die Feststellschraube 34 mit einem Mittel beispielsweise einer Vertiefung für einen Imbusschlüssel versehen. Die Druckkörper 32 und 33 sind vorzugsweise aus einem druckfesten Kunststoff hergestellt.

Die Befestigungsvorrichtung 20 besteht vorzugsweise aus einer eigentlichen Befestigungsplatte 35, an welcher der Apparat befestigt wird und einem Befestigungsstift 36, mit welchem die gesamte Befestigungsvorrichtung 20 an der Kugel 26 befestigbar ist. Die Kugel 26 des Kugelgelenks 19 weist eine dem Befestigungsstift 36 entsprechende und passgenaue Bohrung 37 auf. Des Weiteren ist die Kugel 26 bei der Bohrung 37 derart abgeflacht, dass eine bündige Ebene für die angeschlossene Befestigungsplatte 35 des Apparates entsteht. Aus herstellungstechnischen Gründen kann die Kugel 26 auch auf der gegenüberliegenden Seite der vorher beschriebenen Abflachung gleich ausgestaltet werden. Zur Sicherung und Befestigung der gesamten Befestigungsvorrichtung 20 an der Kugel 26 sind in der Kugel 26 und dem Befestigungsstift 36 korrespondierende Bohrungen 38 bzw. 39 für Bolzen 40 vorgesehen, welche die Befestigungsplatte 20 an der Kugel 26 des Kugelgelenks 19 sichern und diese kraftschlüssig verbinden.

Die Befestigungsplatte 35 ist mit Bohrlöchern 41 versehen. Diese Bohrlöcher 41 sind vorzugsweise auf die marktführenden Apparate abgestimmt, welche zur Befestigung an der Haltevorrichtung 1 vorgesehen sind. Es können auch Langlöcher angeordnet werden, welche auf verschiedene Modelle der gewünschten Apparatekategorie noch mehr Rücksicht nehmen.

In Figur 7 wird eine Variante des Kugelgelenks 19 in Form einer Explosionszeichnung dargestellt. Dabei umfasst das Kugelgelenk 19 neben dem Kupplungsstück 24, der Kugelpfanne 25, der Kugel 26, zwei gegeneinander gerichtete Fixiervorrichtungen 42.

Für die Fixiervorrichtungen 42.1 und 42.2 sind in der Kugelpfanne 25 zwei Öffnungen 43.1 und 43.2 vorgesehen. Diese Öffnungen 43.1 und 43.2 sind vertikal, gegeneinander angeordnet und durchdringen die Wanddicke der Kugelpfanne 25. Sie können jedoch in einem x-beliebigen Winkel angeordnet sein, wobei auch dabei eine gegeneinander ausgerichtete Anordnung der Fixiervorrichtungen 42.1 bzw. 42.2 bevorzugt wird.

Die Fixiervorrichtungen 42.1 bzw. 42.2 sind zweiteilig und innerhalb sich selbst, nochmals zweiteilig aufgebaut. Einerseits umfasst die Fixiervorrichtung 42.1 bzw. 42.2 eine Grobfixierung, welche aus einem Kontaktkörper 44.1 bzw. 44.2, einem Druckkörper 45.1 bzw. 45.2 und einer Feststellschraube 46.1 bzw. 46.2 besteht. Der Kontaktkörper 44.1 bzw. 44.2 ist vorzugsweise aus einem elastischen Kunststoff hergestellt und stellt den eigentlichen Kontakt zwischen der Kugel 26 und dem Druckkörper 45.1 bzw. 45.2 her. Der Druckkörper 45.1 bzw. 45.2 ist dagegen aus einem druckfesten Kunststoff hergestellt. An diesem greift die Feststellschraube 46.1 bzw. 46.2 an und übt auf diesen Druck aus, was zu einer Grobfixierung der Kugel 26 führt. Es kann auch auf den Kontaktkörper 44.1 bzw. 44.2 verzichtet werden. In einer solchen Ausführungsform würde die Grobfixierung alleine durch den Druckkörper 45.1 bzw. 45.2 und der Feststellschraube 46.1 bzw. 46.2 gewährleistet. Um die Sicherheit der Fixiervorrichtung 42.1 bzw. 42.2 zu verbessern, ist die Feststellschraube 46.1 bzw. 46.2 mit einem durchgehenden Innengewinde 47.1 bzw. 47.2 versehen. In diesem kann dann eine weitere Feststellschraube 48.1 bzw. 48.2 eingeschraubt werden, welche über den Kontaktkörper 49.1 bzw. 49.2 an der Kugel 26 angreift. Vorzugsweise wird der Kontaktkörper 49.1 bzw. 49.2 wie der Kontaktkörper 44.1 bzw. 44.2 aus einem elastischen Kunststoff hergestellt. Durch diese zusätzliche Konstruktion ist eine Feinfixierung der Kugel 26 möglich. Durch die gegenüberliegende Anordnung der Fixiervorrichtungen 42.1 und 42.2 kann eine hohe Sicherheit gegen unbeabsichtigtes Verstellen der durch den Benutzer vorgenommenen Einstellungen gewährleistet werden. Bei höheren Belastungen auf die Kugel 26 des Kugelgelenks 19 ist es denkbar, die Anzahl der Fixiervorrichtungen zu erhöhen, wobei diese jeweils gegeneinander angeordnet sind.

Zusammenfassend kann festgestellt werden, dass mit dieser Erfindung eine Haltevorrichtung 1 geschaffen wurde, welche einfach im Aufbau und zuverlässig in der Anwendung ist. Des Weiteren bleibt die Haltevorrichtung 1 in dem gesamten Schwenkbereich ausbalanciert und kann bei Bedarf von jedem Benutzer selbst einfach angepasst werden.

**Patentansprüche**

1. Haltevorrichtung (1) für einen Apparat, insbesondere für einen Bildschirm, umfassend:

   a) eine Tragkonstruktion (3) mit einem innerhalb eines vorgegebenen Bereichs frei variierbaren Neigungswinkel ($\alpha$),

   b) ein elastisches Element (9) zum Stützen der Tragkonstruktion entsprechend dem variierbaren Neigungswinkel ($\alpha$),

   c) und eine Verstellvorrichtung (8), welche entlang einer Verstellachse (16) eine Verstellung eines Abstützpunktes des elastischen Elements (9) ermöglicht, wobei die Verstellachse in einem Verstellachsenwinkel ($\gamma$) starr geneigt angeordnet ist
   **dadurch gekennzeichnet, dass**

   d) eine Federkraftkennlinie des elastischen Elements so gewählt ist, dass
   eine Maximalbelastungsabweichung $\Delta F(SKKmax - FKK)$ betragsmässig in der gleichen Grössenordnung liegt wie eine Minimalbelastungsabweichung $\Delta F(FKK - SKKmin)$,
   wobei:

   die Maximalbelastungsabweichung $\Delta F(SKKmax - FKK)$ die grösste Kraftdifferenz zwischen einer Maximal-Sollkraftkurve (SKKmax) für Maximalbelastung und der Federkraftkennlinie (FKK) im gesamten Neigungswinkel-Bereich ist, und

   die Minimalbelastungsabweichung $\Delta F(FKK - SKKmin)$ die grösste Kraftdifferenz zwischen der Federkraftkennlinie (FKK) und einer Minimal-Sollkraftkurve (SKKmin) für Minimalbelastung im gesamten Neigungswinkel-Bereich ist.

2. Haltevorrichtung insbesondere nach Anspruch 1 für einen Apparat, insbesondere für einen Bildschirm, umfassend:

   a) eine Tragkonstruktion (3) mit einem innerhalb eines vorgegebenen Bereichs frei variierbaren Neigungswinkel ($\alpha$),

   b) ein elastisches Element (9) zum Stützen der Tragkonstruktion entsprechend dem variierbaren Neigungswinkel ($\alpha$),

   c) und eine Verstellvorrichtung (8), welche entlang einer Verstellachse (16) eine Verstellung eines Abstützpunktes des elastischen Elements (9) ermöglicht, wobei die Verstellachse in einem Verstellachsenwinkel ($\gamma$) starr geneigt angeordnet ist
   **dadurch gekennzeichnet, dass**

d) der Verstellachsenwinkel ($\gamma$) in Abhängigkeit vom Neigungswinkel-Bereich so gewählt ist, dass im vorgegebenen Neigungswinkel-Bereich die Maximalbelastungsabweichung $\Delta F$(SKKmax - FKK) und die Minimalbelastungsabweichung $\Delta F$(FKK - SKKmin) kleiner als 15%, insbesondere kleiner oder gleich 10% der mittleren Federkraft des elastischen Elements (9) sind,
wobei:

die Maximalbelastungsabweichung $\Delta F$(SKKmax - FKK) die grösste Kraftdifferenz zwischen einer Maximal-Sollkraftkurve (SKKmax) für Maximalbelastung und der Federkraftkennlinie (FKK) im gesamten Neigungswinkel-Bereich ist, und

die Minimalbelastungsabweichung $\Delta F$(FKK - SKKmin) die grösste Kraftdifferenz zwischen der Federkraftkennlinie (FKK) und einer Minimal-Sollkraftkurve (SKKmin) für Minimalbelastung im gesamten Neigungswinkel-Bereich ist.

3.  Haltevorrichtung insbesondere nach Anspruch 1 oder 2, für einen Apparat, insbesondere für einen Bildschirm, umfassend:

a) eine Tragkonstruktion (3) mit einem innerhalb eines vorgegebenen Bereichs frei variierbaren Neigungswinkel ($\alpha$),

b) ein elastisches Element (9) zum Stützen der Tragkonstruktion entsprechend dem variierbaren Neigungswinkel ($\alpha$),

c) und eine Verstellvorrichtung (8), welche entlang einer Verstellachse (16) eine Verstellung eines Abstützpunktes des elastischen Elements (9) ermöglicht, wobei die Verstellachse in einem Verstellachsenwinkel ($\gamma$) starr geneigt angeordnet ist
**dadurch gekennzeichnet, dass**

d) der Verstellachsenwinkel ($\gamma$) in Abhängigkeit vom Neigungswinkel-Bereich so gewählt ist, dass im vorgegebenen Neigungswinkel-Bereich die Minimal-Sollkraftkurve (SKKmin) und die Maximal-Sollkraftkurve (SKKmax) im Wesentlichen parallel verlaufen,
wobei:

die Maximalbelastungsabweichung $\Delta F$(SKKmax - FKK) die grösste Kraftdifferenz zwischen einer Maximal-Sollkraftkurve (SKKmax) für Maximalbelastung und der Federkraftkennlinie (FKK) des elastischen Elements (9) im gesamten Neigungswinkel-Bereich ist, und

die Minimalbelastungsabweichung $\Delta F$(FKK - SKKmin) die grösste Kraftdifferenz zwischen der Federkraftkennlinie (FKK) des elastischen Elements (9) und einer Minimal-Sollkraftkurve (SKKmin) für Minimalbelastung im gesamten Neigungswinkel-Bereich ist.

4.  Haltevorrichtung nach einem der Ansprüche 1 bis 3, **dadurch gekennzeichnet, dass** der Verstellachsenwinkel bezüglich einer Lotrechten einen Winkel von mindestens 40°, vorzugsweise im Bereich von 45° bis 60° einschliesst.

5.  Haltevorrichtung nach einem der Ansprüche 1 bis 4, **dadurch gekennzeichnet, dass** der Neigungswinkel-Bereich bezogen auf eine horizontale Achse von -10° bis +50° reicht.

6.  Haltevorrichtung nach einem der Ansprüche 1 bis 5, **dadurch gekennzeichnet, dass** die Tragkonstruktion (3) einen Führungsarm (10) aufweist, dass an einem äusseren Ende des Führungsarms (10) ein Anschlussgelenk (12) angeordnet ist und dass das elastische Element (9) in diesem Anschlussgelenk (12) mit dem Führungsarm (10) gekoppelt ist.

7.  Haltevorrichtung nach einem der Ansprüche 1 bis 6, **dadurch gekennzeichnet, dass** die Verstellvorrichtung (8) an einem Befestigungselement (2) der Haltevorrichtung (1) angeordnet ist, wobei das Befestigungselement (2) vorzugsweise so ausgebildet ist, dass die Haltevorrichtung (1) um eine vertikale Achse (7) schwenkbar ist.

8.  Haltevorrichtung nach einem der Ansprüche 1 bis 7, **dadurch gekennzeichnet, dass** die Tragkonstruktion (3) zumindest zwei parallelogrammartig gekoppelte Arme (10, 11) aufweist.

9. Haltevorrichtung nach einem der Ansprüche 1 bis 8, **dadurch gekennzeichnet, dass** das elastische Element eine vorzugsweise vorgespannte Schraubenfeder (9) ist.

10. Haltevorrichtung nach einem der Ansprüche 1 bis 9, **dadurch gekennzeichnet, dass** eine Befestigungsvorrichtung (20) zur Befestigung eines Apparats, insbesondere an einer Kugel (26) eines Kugelgelenks (19) vorgesehen ist.

11. Haltevorrichtung nach einem der Ansprüche 1 bis 10, **dadurch gekennzeichnet, dass** sie ein Kugelgelenk mit zumindest einer Fixiervorrichtung (27) zur Fixierung des Kugelgelenks (19) aufweist, welche zumindest aus zwei Elementen gebildet ist.

12. Haltevorrichtung nach Anspruch 11, **dadurch gekennzeichnet, dass** zwei Druckkörper (32, 33) entgegengesetzt auf die Kugel (26) wirken.

13. Haltevorrichtung nach einem der Ansprüche 1 bis 10, **dadurch gekennzeichnet, dass** zumindest eine Fixiervorrichtung (42) zur Fixierung des Kugelgelenks (19) eine Grobfixierung und eine Feinfixierung ermöglicht.

14. Haltevorrichtung nach Anspruch 13, **dadurch gekennzeichnet, dass** die Fixiervorrichtung (42)

    a) einen ersten Druckkörper (45);

    b) eine erste Schraube (46), welche mit einer inneren durchgehenden Bohrung (47) versehen ist und am ersten Druckkörper (45) angreift;

    c) einen zweiten Druckkörper (49); und

    d) eine zweite Schraube (48), welche durch die erste Schraube (46) am zweiten Druckkörper (49) angreift, umfasst.

15. Haltevorrichtung nach Anspruch 14, **dadurch gekennzeichnet, dass** die Fixiervorrichtung (42) einen zusätzlichen Druckkörper (44) umfasst, welcher zwischen dem ersten Druckkörper (45) und der Kugel (26) angeordnet ist.

16. Haltevorrichtung nach einem der Ansprüche 11 bis 15, **dadurch gekennzeichnet, dass** das Kugelgelenk in zumindest einem Freiheitsgrad einen Festanschlag aufweist.

**Claims**

1. Holding device (1) for a device, in particular for a VDU, comprising:

    a) a carrier construction (3) having an inclination angle ($\alpha$) which can be freely varied within a predetermined range,
    b) a resilient element (9) for supporting the carrier construction in accordance with the variable inclination angle ($\alpha$),
    c) and an adjustment device (8) which allows adjustment of a support point of the resilient element (9) along an adjustment axis (16), the adjustment axis being arranged in a rigidly inclined manner at an adjustment axis angle ($\gamma$),
    **characterised in that**
    d) a characteristic line of the resilient force of the resilient element is selected in such a manner that a maximum load deviation $\Delta F(SKKmax-FKK)$ is in the same order of magnitude in terms of value as a minimum load deviation $\Delta F(FKK-SKKmin)$,
    wherein:

    the maximum load deviation $\Delta F(SKKmax-FKK)$ is the greatest force difference between a maximum desired force curve (SKKmax) for maximum load and the resilient force characteristic line (FKK) in the entire inclination angle range and

the minimum load deviation ΔF(FKK-SKKmin) is the greatest force difference between the resilient force characteristic line (FKK) and a minimum desired force curve (SKKmin) for minimum load in the entire inclination angle range.

2. Holding device, in particular according to claim 1, for a device, in particular for a VDU, comprising:

a) a carrier construction (3) having an inclination angle (α) which can be freely varied within a predetermined range,
b) a resilient element (9) for supporting the carrier construction in accordance with the variable inclination angle (α),
c) and an adjustment device (8) which allows adjustment of a support point of the resilient element (9) along an adjustment axis (16), the adjustment axis being arranged in a rigidly inclined manner at an adjustment axis angle (γ),
**characterised in that**
d) the adjustment axis angle (γ) is selected in accordance with the inclination angle range in such a manner that, in the predetermined inclination angle range, the maximum load deviation ΔF(SKKmax-FKK) and the minimum load deviation ΔF(FKK-SKKmin) are less than 15%, in particular less than or equal to 10% of the mean resilient force of the resilient element (9),
wherein:

the maximum load deviation ΔF(SKKmax-FKK) is the greatest force difference between a maximum desired force curve (SKKmax) for maximum load and the resilient force characteristic line (FKK) in the entire inclination angle range, and
the minimum load deviation ΔF(FKK-SKKmin) is the greatest force difference between the resilient force characteristic line (FKK) and a minimum desired force curve (SKKmin) for minimum load in the entire inclination angle range.

3. Holding device, in particular according to claim 1 or 2, for a device, in particular for a VDU, comprising:

a) a carrier construction (3) having an inclination angle (α) which can be freely varied within a predetermined range,
b) a resilient element (9) for supporting the carrier construction in accordance with the variable inclination angle (α),
c) and an adjustment device (8) which allows adjustment of a support point of the resilient element (9) along an adjustment axis (16), the adjustment axis being arranged in a rigidly inclined manner at an adjustment axis angle (γ),
**characterised in that**
d) the adjustment axis angle (γ) is selected in accordance with the inclination angle range in such a manner that, in the predetermined inclination angle range, the minimum desired force curve (SKKmin) and the maximum desired force curve (SKKmax) extend substantially parallel,
wherein:

the maximum load deviation ΔF(SKKmax-FKK) is the greatest force difference between a maximum desired force curve (SKKmax) for maximum load and the resilient force characteristic line (FKK) of the resilient element (9) in the entire inclination angle range, and
the minimum load deviation ΔF(FKK-SKKmin) is the greatest force difference between the resilient force characteristic line (FKK) of the resilient element (9) and a minimum desired force curve (SKKmin) for minimum load in the entire inclination angle range.

4. Holding device according to any one of claims 1 to 3, **characterised in that** the adjustment axis angle relative to a perpendicular encloses an angle of at least 40°, preferably in the range of from 45° to 60°.

5. Holding device according to any one of claims 1 to 4, **characterised in that** the inclination angle range relative to a horizontal axis is in the order of from -10° to +50°.

6. Holding device according to any one of claims 1 to 5, **characterised in that** the carrier construction (3) has a guide arm (10), **in that** a connection joint (12) is arranged at an outer end of the guide arm (10) and **in that** the resilient element (9) **in that** connection joint (12) is connected to the guide arm (10).

7. Holding device according to any one of claims 1 to 6, **characterised in that** the adjustment device (8) is arranged on a securing element (2) of the holding device (1), the securing element (2) preferably being constructed in such a manner that the holding device (1) can be pivoted about a vertical axis (7).

8. Holding device according to any one of claims 1 to 7, **characterised in that** the carrier construction (3) has at least two arms (10, 11) which are connected in the manner of a parallelogram.

9. Holding device according to any one of claims 1 to 8, **characterised in that** the resilient element is a preferably pretensioned helical spring (9).

10. Holding device according to any one of claims 1 to 9, **characterised in that** a securing device (20) is provided for securing a device, in particular on a ball (26) of a ball-and-socket joint (19).

11. Holding device according to any one of claims 1 to 10, **characterised in that** it has a ball-and-socket joint having at least one fixing device (27) for fixing the ball-and-socket joint (19), which fixing device (27) is formed by at least two elements.

12. Holding device according to claim 11, **characterised in that** two pressure members (32, 33) act on the ball (26) in an opposing manner.

13. Holding device according to any one of claims 1 to 10, **characterised in that** at least one fixing device (42) for fixing the ball-and-socket joint (19) allows coarse fixing and fine fixing.

14. Holding device according to claim 13, **characterised in that** the fixing device (42) comprises:

   a) a first pressure member (45);
   b) a first screw (46) which is provided with an inner through-hole (47) and which acts on the first pressure member (45);
   c) a second pressure member (49); and
   d) a second screw (48) which acts on the second pressure member (49) through the first screw (46).

15. Holding device according to claim 14, **characterised in that** the fixing device (42) comprises an additional pressure member (44) which is arranged between the first pressure member (45) and the ball (26).

16. Holding device according to any one of claims 11 to 15, **characterised in that** the ball-and-socket joint has a fixed stop in at least one degree of freedom.


**Revendications**

1. Dispositif de fixation (1) pour un appareil, en particulier pour un écran, comprenant :

   a) une construction support (3) avec un angle d'inclinaison ($\alpha$) librement variable à l'intérieur d'une plage prédéterminée,
   b) un élément élastique (9) pour soutenir la construction support en fonction de l'angle d'inclinaison variable ($\alpha$), et
   c) un dispositif de réglage (8) qui, le long d'un axe de réglage (16), permet le déplacement d'un point d'appui de l'élément élastique (9), l'axe de réglage étant disposé avec une inclinaison fixe selon un angle de l'axe de réglage ($\gamma$)
   **caractérisé en ce qu'**
   d) une caractéristique d'élasticité de l'élément élastique est choisie de telle façon qu'un écart de charge maximal $\Delta F$ (SKKmax - FKK) a une valeur qui est du même ordre de grandeur que celle d'un écart de charge minimal $\Delta F$ (FKK - SKKmin),
   où :

   l'écart de charge maximal $\Delta F$ (SKKmax - FKK) est la plus grande différence de force entre une courbe de force théorique maximale (SKKmax) pour une charge maximale et la caractéristique d'élasticité (FKK) sur la totalité de la plage d'angle d'inclinaison, et

l'écart de charge minimal ΔF (FKK - SKKmin) est la plus grande différence de force entre la caractéristique d'élasticité (FKK) et une courbe de force théorique minimale (SKKmin) pour une charge minimale sur la totalité de la plage d'angle d'inclinaison.

**2.** Dispositif de fixation en particulier selon la revendication 1 pour un appareil, en particulier pour un écran, comprenant :

a) une construction support (3) avec un angle d'inclinaison (α) librement variable à l'intérieur d'une plage prédéterminée,
b) un élément élastique (9) pour soutenir la construction support en fonction de l'angle d'inclinaison variable (α), et
c) un dispositif de réglage (8) qui, le long d'un axe de réglage (16), permet le déplacement d'un point d'appui de l'élément élastique (9), l'axe de réglage étant disposé avec une inclinaison fixe selon un angle de l'axe de réglage (γ)
**caractérisé en ce que**
d) l'angle de l'axe de réglage (γ) est choisi en fonction de la plage d'angle d'inclinaison de telle façon que, dans la plage d'angle d'inclinaison prédéterminée, l'écart de charge maximal ΔF (SKKmax - FKK) et l'écart de charge minimal ΔF (FKK - SKKmin) soient inférieurs à 15%, en particulier inférieurs ou égaux à 10% de l'élasticité moyenne de l'élément élastique (9),
où :

l'écart de charge maximal ΔF (SKKmax - FKK) est la plus grande différence de force entre une courbe de force théorique maximale (SKKmax) pour une charge maximale et la caractéristique d'élasticité (FKK) sur la totalité de la plage d'angle d'inclinaison, et
l'écart de charge minimal ΔF (FKK - SKKmin) est la plus grande différence de force entre la caractéristique d'élasticité (FKK) et une courbe de force théorique minimale (SKKmin) pour une charge minimale sur la totalité de la plage d'angle d'inclinaison.

**3.** Dispositif de fixation en particulier selon la revendication 1 ou la revendication 2, pour un appareil, en particulier pour un écran, comprenant :

a) une construction support (3) avec un angle d'inclinaison (α) librement variable à l'intérieur d'une plage prédéterminée,
b) un élément élastique (9) pour soutenir la construction support en fonction de l'angle d'inclinaison variable (α), et
c) un dispositif de réglage (8), qui le long d'un axe de réglage (16), permet le déplacement d'un point d'appui de l'élément élastique (9), l'axe de réglage étant disposé avec une inclinaison fixe selon un angle de l'axe de réglage (γ)
**caractérisé en ce que**
d) l'angle de l'axe de réglage (γ) est choisi en fonction de la plage d'angle d'inclinaison de telle façon que, dans la plage d'angle d'inclinaison prédéterminée, la courbe de force théorique minimale (SKKmin) et la courbe de force théorique maximale (SKKmax) s'étendent de manière sensiblement parallèle,
où :

l'écart de charge maximal ΔF (SKKmax - FKK) est la plus grande différence de force entre une courbe de force théorique maximale (SKKmax) pour une charge maximale et la caractéristique d'élasticité (FKK) de l'élément élastique (9) sur la totalité de la plage d'angle d'inclinaison, et
l'écart de charge minimal ΔF (FKK - SKKmin) est la plus grande différence de force entre la caractéristique d'élasticité (FKK) de l'élément élastique (9) et une courbe de force théorique minimale (SKKmin) pour une charge minimale sur la totalité de la plage d'angle d'inclinaison.

**4.** Dispositif de fixation selon l'une des revendications 1 à 3, **caractérisé en ce que** l'angle de l'axe de réglage décrit par rapport à une verticale un angle d'au moins 40°, de préférence dans la plage de 45° à 60°.

**5.** Dispositif de fixation selon l'une des revendications 1 à 4, **caractérisé en ce que** la plage d'angle d'inclinaison va de -10° à +50° par rapport à un axe horizontal.

**6.** Dispositif de fixation selon l'une des revendications 1 à 5, **caractérisé en ce que** la construction support (3) présente un bras de guidage (10), **en ce qu'**une articulation de liaison (12) est disposée à une extrémité extérieure du bras de guidage (10), et **en ce que** l'élément élastique (9) est couplé avec le bras de guidage (10) dans cette articulation de liaison (12).

7. Dispositif de fixation selon l'une des revendications 1 à 6, **caractérisé en ce que** le dispositif de réglage (8) est disposé sur un élément de fixation (2) du dispositif de fixation (1), l'élément de fixation (2) étant de préférence réalisé de telle façon que le dispositif de fixation (1) peut pivoter autour d'un axe vertical (7).

8. Dispositif de fixation selon l'une des revendications 1 à 7, **caractérisé en ce que** la construction support (3) présente au moins deux bras (10, 11) couplés en forme de parallélogramme.

9. Dispositif de fixation selon l'une des revendications 1 à 8, **caractérisé en ce que** l'élément élastique est un ressort hélicoïdal (9) de préférence précontraint.

10. Dispositif de fixation selon l'une des revendications 1 à 9, **caractérisé en ce qu'**il est prévu un dispositif de fixation (20) pour fixer un appareil, en particulier sur une sphère (26) d'un joint sphérique (19).

11. Dispositif de fixation selon l'une des revendications 1 à 10, **caractérisé en ce qu'**il présente un joint sphérique, avec au moins un dispositif de blocage (27) pour bloquer le joint sphérique (19), qui est formé d'au moins deux éléments.

12. Dispositif de fixation selon la revendication 11, **caractérisé en ce que** deux éléments d'appui (32, 33) agissent de manière opposée sur la sphère (26).

13. Dispositif de fixation selon l'une des revendications 1 à 10, **caractérisé en ce qu'**au moins un dispositif de blocage (42) pour bloquer le joint sphérique (19) permet un blocage grossier et un blocage fin.

14. Dispositif de fixation selon la revendication 13, **caractérisé en ce que** de dispositif de blocage (42) comprend

   a) un premier élément d'appui (45),
   b) une première vis (46) qui est munie d'un perçage interne traversant (47) et qui vient en prise avec le premier élément d'appui (45),
   c) un deuxième élément d'appui (49), et
   d) une deuxième vis (48) qui vient en prise avec le deuxième élément d'appui (49) à travers la première vis (46).

15. Dispositif de fixation selon la revendication 14, **caractérisé en ce que** le dispositif de blocage (42) comprend un élément d'appui supplémentaire (44) qui est disposé entre le premier élément d'appui (45) et la sphère (26).

16. Dispositif de fixation selon l'une des revendications 11 à 15, **caractérisé en ce que** le joint sphérique présente une butée fixe dans au moins un degré de liberté.

Fig.1

Fig.2

Fig. 3

Fig. 4

Fig. 5

Fig. 6

EP 1 283 970 B1

Fig.7